# EUROPEAN PATENT APPLICATION

(11) **EP 2 489 250 A1**
(43) Date of publication of application: **22.08.2012**
(21) Application number: 12154207.0
(22) Date of filing: 07.02.2012
(51) Int. Cl.: A01B 61/02, A01B 61/04, A01D 34/86, A01D 75/18

(54) **A safety release device and a mower**

(30) Priority: 16.02.2011 DK 201170090
(71) Applicant: Kongskilde Industries A/S, 4180 Sorø (DK)
(72) Inventor: Gröne, Lukas, 24988 Oeversee (DE)
(74) Representative: Joergensen, Bjoern Barker

(57) **Abstract**

A safety release device for allows by release mutual displacement of two interconnected and force transmitting elements (23, 27) when subjected to an excessive force, and comprises a first portion (43) of one of the force transmitting elements and a second portion (45) of the other of the force transmitting elements. The first portion (43) and the second portion (45) transmit force in a first direction (F_{c}) and one (45) of said first and second portions is able to move laterally relative to said first direction against a retaining force (37), when the force transmitted becomes excessive, to release the safety release device. A rotating element (49) is inserted between the first portion (43) and the second portion (45) to transmit force between the first portion (43) and the second portion (45) prior to release of the safety release device.

## Description

The present invention relates to a safety release device for allowing by release mutual displacement of two interconnected and force transmitting elements when subjected to an excessive force, comprising a first portion of one of said two interconnected and force transmitting elements and a second portion of the other of said two interconnected and force transmitting elements, the first portion and the second portion transmitting force in a first direction and one of said first and second portions being able to move laterally, possibly by rotation, relative to said first direction against a retaining force, when the force to be transmitted becomes excessive, to release the safety release device.

The invention further relates to a mower comprising a safety release device.

EP-A-1 300 065 discloses a mower of the above mentioned art, more particular a mower for suspension by a rear three-point lift of an agricultural tractor to have a working position extending laterally of the track of the tractor, said mower being provided with a safety release device for allowing the mower to swing backwards in case of accidental impact on a stone, a pole or other obstacle in a field, said safety release device comprising a locking detent and a restraining detent the former being stressed by a compression spring against the latter. The two detents have respective slanted mutually engaging surfaces, which slide against each other to disengage and release the safety device in case an excessive force is loading the safety release device e.g. in case of an impact as mentioned.

DE-U-20 2007 012 805 also discloses a rear lift suspended mower with a safety release device, said device comprising a pliers-shaped gripper and a circular cylindrical member gripped by the gripper whose jaws have a circular contour corresponding to the contour of the cylindrical member. The jaws of the gripper are closed together by a spring force. In case of an excessive load the cylindrical member will be pulled out of the gripper the internal surfaces of the jaws sliding on the surface of the cylindrical member, the jaws being forced apart, and the pliers shaped gripper and the cylindrical member being disengaged. In alternative embodiment a detent is shifted laterally against a spring force relative to the rotary direction of movement of a force transmitting element rotating on a pivot in case of release.

A common feature of the prior art examples is that engaging surfaces of the safety release device slide against each other under a heavy load to disengage when the device is released. This entails a problem of heavy wear on the surfaces with the result that the excessive force that will result in a release the device will gradually decrease. Further the wear of the surfaces will alter their nature e.g. by wearing off a painted or galvanized surface, which may result in the surfaces getting rusty. The altered surfaces will generally entail an altered excessive force that will result in a release the device, and in the case of rusty surfaces that altered force will be an increased force.

It is the object of the invention to avoid or at least reduce said problem of the prior art.

According to the invention this is obtained in that a rotating element is inserted between the first portion and the second portion, said rotating element transmitting force between the first portion and the second portion prior to release of the safety release device. Hereby the surfaces sliding against each other to disengage and the entailed wear are avoided.

Preferably the rotating element comprises a rolling member rolling by release of the safety release device on a surface of at least one of the first and the second portion. Using a rolling member reduces the over all wear in the device.

Preferably said surface is a convex curved surface. This provides for a more smooth rolling movement decreasing the wear.

In an embodiment the rotating element comprises a link member journalled to at least one of the first portion and the second portion.

In a preferred embodiment the link member engages with the rolling member. This provides for control or guiding of the movements of the rolling member.

In a preferred embodiment the link member is journalled to both of the first and the second portion. Thus the link member is able to guide or control the mutual movement of the first and the second portion.

Preferably the link member is journalled to at least one of the first and the second portion through an elongated hole. Thus a larger relative movement of the first and the second portion is allowed after release of the device.

In a preferred practical embodiment the first and the second portion comprise partial circular cylindrical surfaces on which the rolling member rolls by release of the safety release device, said partial circular cylindrical surfaces having mutually parallel axes, the link member is journalled to either of the first and the second portion to rotate around the axes of the partial circular cylindrical surfaces, and the link member engages with the roller member to allow the roller member to rotate around an axis parallel to and aligned with the axes of the partial circular cylindrical surfaces.

Further the object is obtained by a mower comprising connecting elements one of which comprises two interconnected and force transmitting elements, said mower comprising a safety release device according to the invention.

In one embodiment the safety release device is implemented in a chain of suspension elements providing the over all connection between a mowing aggregate of the mower, and a connection to the tractor or another carrying vehicle e.g. a connection to a rear three-point lift of such vehicle. However the safety release device may be implemented in other places, especially in an agricultural mower, where transmission of an excess load, e.g. due to an accidental impact, should be avoided.

In the following the invention will be explained in more detail by means of an example of a non-limiting embodiment shown in the accompanying schematic drawings, in which
Fig. 1 shows in a top view a part of a rear lift suspended mower in a working position,
Fig. 2 shows the mower of Fig. 1 in a release position,
Fig. 3 is an oblique view of a safety release device according to the invention,
Figs. 4 to 6 are side views of the device of Fig. 3, and
Fig. 7 shows an enlarged detail of Fig. 4.

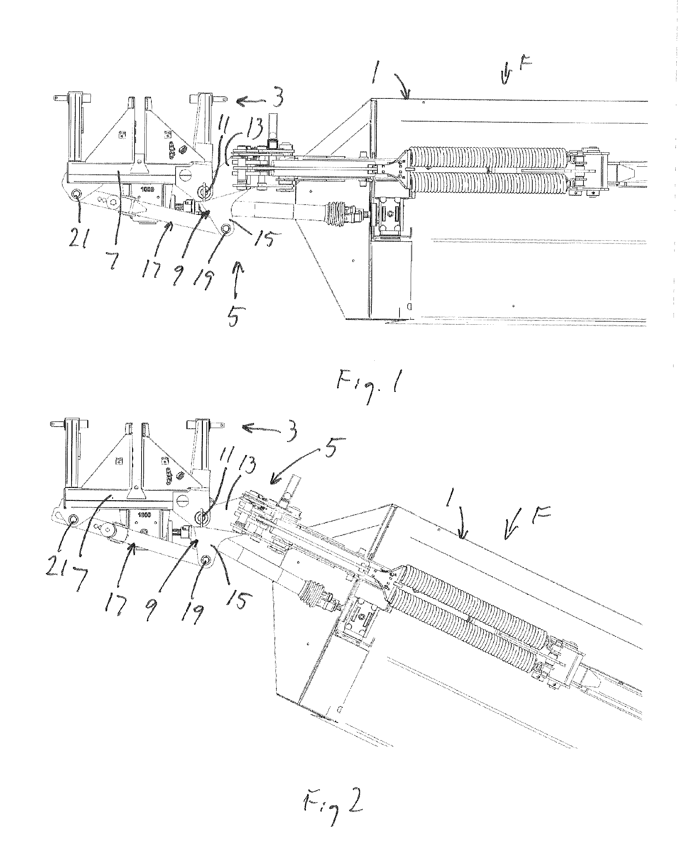

A mower shown in part in Figs. 1 and 2 comprises a mowing aggregate 1, a three point connection 3 for connection with a three point suspension lift of a tractor (not shown), and a connecting link mechanism 5 between the mowing aggregate 1 and the three point connection 3 to provide for movement of the mowing aggregate 1 relative to the three point connection 3 and thus relative to the tractor when hitched, as it is commonly known in the art. The connecting link mechanism 5 comprises a number of connecting elements including a frame member 7 for connection with the three point suspension lift via the three point connection 3, and an L-shaped member 9 connected by a first pivot 11 with a vertical axis to the frame member 7. One leg 13 of the L-shaped member 9 is connected via further links to the mowing aggregate 1 and a second leg 15 of the L-shaped member 9 is connected to a safety release device 17.

The safety release device 17 is formed as a strut connected at one end to the second leg 15 of the L-shaped member 9 by a second pivot 19 and connected at the opposite end to the frame member 7 by a third pivot 21.

In an unreleased position or working position the strut 17 maintains the mowing aggregate 1 in a working position as shown in Fig. 1. If during work an excessive force F is acting on the mowing aggregate 1 e.g. due to an encounter with an obstacle the strut will be released i.e. the strut will change to a released position allowing the mowing aggregate 1 to swing backwards to the position shown in Fig. 2.

As described so far the mower is similar to prior art. However the construction of the strut is novel in accordance with the present invention.

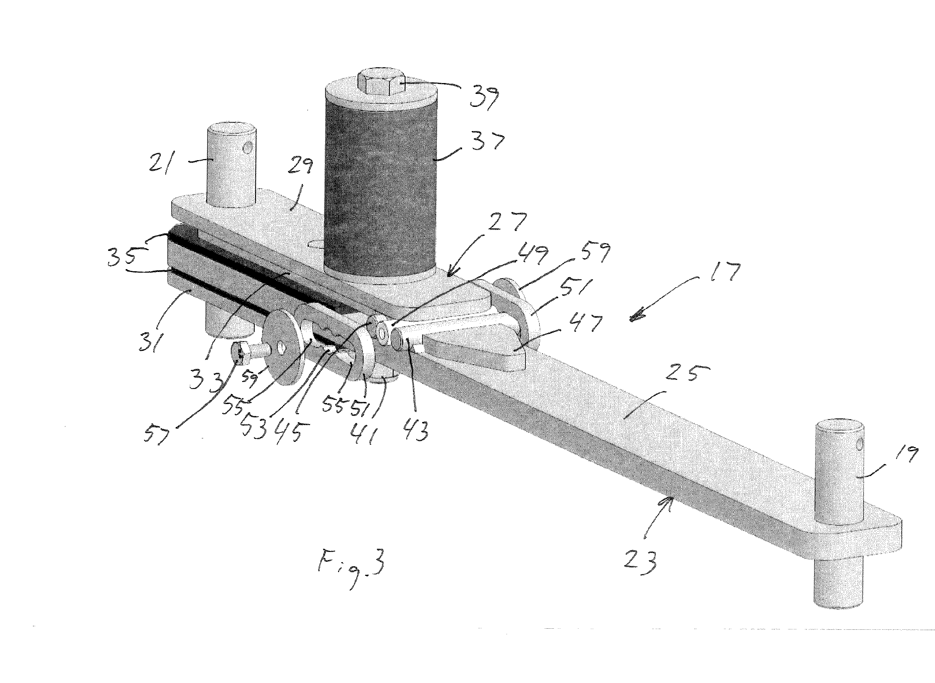

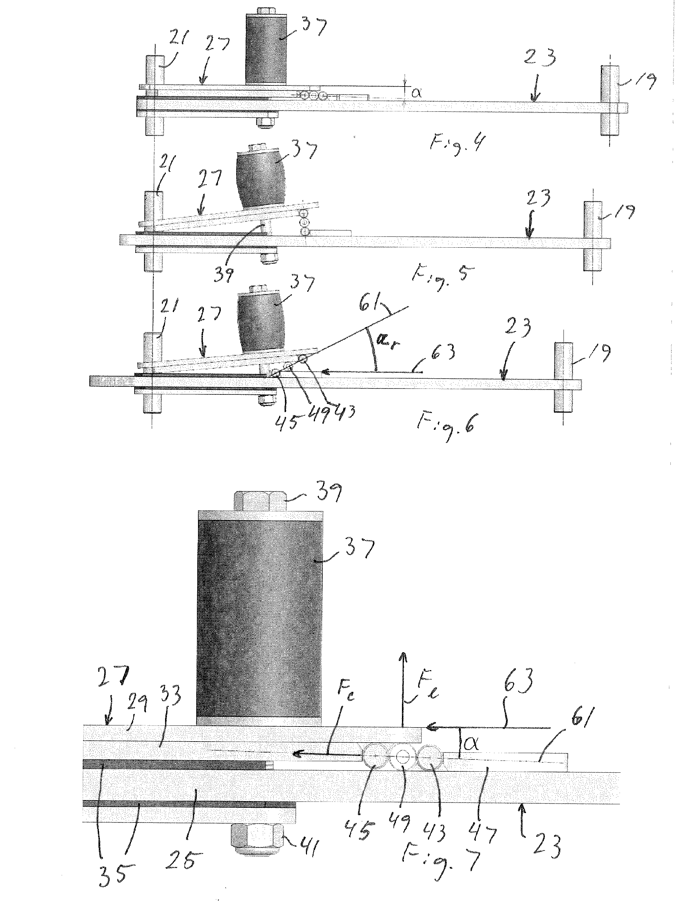

Referring to Figs. 3 to 7 the strut 17 comprises two interconnected and force transmitting elements, of which a first element 23 comprises the second pivot 19 and a long flat bar 25 connected at one end to the second pivot 19 and having at the opposite end at least one elongated through hole, not shown. The second element 27 of the two interconnected force transmitting elements comprises the third pivot 21 and two short flat bars 29 and 31 connected thereto. An upper bar 29 of the two short flat bars is connected to the third pivot 19 to be allowed to rotate between the positions shown in Figs. 4 and 5, respectively. A flat spacer 33 is fixed to the lower side of the upper bar 29. Between the flat spacer 33 and the long flat bar 25 and between the latter and a lower bar 31 of the two short flat bars low friction plastic sliders 35 are provided to minimize the friction between the first element 23 and the second element 27 of the two interconnected force transmitting elements. A hollow rubber spring 37 is placed on top of the upper bar 29 and a bolt 39 is passing through the rubber spring 37, the upper bar 29, the flat spacer 33, the elongated hole in the long flat bar 25, and the lower bar 31 to be secured by a nut 41 below the lower bar 31. It should be understood that the third pivot 21 and the bolt 39 extend through the, or one of the, elongated hole(s) in the long flat bar 25 to allow the second element 27 to slide towards the second pivot 19 and vice versa.

A first circular cylindrical element 43 is fixed, preferably by welding, to the long flat bar 25, a fish plate 47 being fixed to the long flat bar 25 providing an abutment for the cylindrical element 43. A second circular cylindrical element 45 is fixed, also preferably by welding, to the upper bar 31, the flat spacer 33 providing an abutment for the second cylindrical element 45. A cylindrical roller 49 is placed between the two cylindrical elements 43, 45. The roller 49 is free to rotate, but is kept in place between the cylindrical elements 43, 45 by means of two side plates 51 each comprising three aligned holes, namely a central hole 53 and two elongated holes 55. The ends of the roller 49 are accommodated in the central holes 53 and the ends of the cylindrical elements 43, 45 are accommodated in either of the elongated holes 55. Screws 57 inserted in the ends of the roller 49 through washers 59 and the central holes 53 secure the side plates 51 the respective ends of the respective elements accommodated in the respective holes.

It should be noted that in Fig. 3 one of the side plates 51 with screw 57 and washer 59 are shown as an exploded view and that in Figs. 4 to 7 the side plates are not shown for sake of clarity.

It should further be noted that in the embodiment shown the three holes 53, 55 are merged because the ends of the respective elements accommodated therein need to abut on each other like the central parts of the respective elements. However it would be possible to recess said ends whereby they would not abut on each other and the holes would not need to be merged.

The safety release device or the strut 17 works as follows.

During normal use the strut 17 is subject to pressure due to the force F acting on the mowing aggregate 1 due to friction from the ground and from a crop being harvested. Thus a compressive force F_{c} is acting through the long flat bar to the first cylindrical element 43. From the first cylindrical element 43 the compressive force F_{c} is transferred to the second cylindrical element 45 through the roller 49.

However the two cylindrical elements 43, 45 and the roller 49 are positioned with their respective axes aligned as indicated in Fig. 7 on an axis of alignment 61, which forms an angle α with the overall direction of force 63 through the strut 17, whereby the compressive force F_{c} is split in two components, namely a main component extending through the strut 17 from the second pivot 19 to the third pivot 21, and a lateral component or lateral force Fₗ tending to raise the upper bar 29 against a compressive force of the spring 37.

During normal use the force F will not result in a lateral force Fₗ of sufficient strength to overcome the compressive force of the spring 37 and the strut 17 will stay in its working position as shown in Figs. 1, 3, 4 and 7. However if the force F acting on the mowing aggregate 1 becomes excessive the lateral force Fₗ will overcome the force of the spring 37 and the upper bar 29 will rotate around its point of attack on the third pivot 21 the roller 49 rolling on the cylindrical surfaces of the cylindrical elements 43, 45 and the side plates 51 rotating together therewith, and the long flat bar 25 will slide relative to the second element 27 the strut 17 changing to its released position cf. Figs. 5 and 6.

During the transition from the position shown in Fig. 5 to the position shown in Fig. 6 the transmission of force through the cylindrical elements 43, 45 and the roller 49 ceases and these three elements are moved apart the cylindrical elements 43, 45 sliding through their respective elongated holes 55 in the side plates 51.

Once the strut 17 is in its released position as shown in Fig. 6 the axis of alignment 61 forms an angle αᵣ with the overall direction of force 63, which is much larger than the angle α in the unreleased position. Therefore a much lesser force is needed to return the mowing aggregate 1 to its working position than the excessive force, which resulted in the release of the safety release device.

It should be noted that the angle α should be larger than zero to provide the lateral force F_{c}. One way of ensuring that the angle α is larger than zero is to provide the roller 49 with a diameter slightly larger than the diameter of the cylindrical elements 43, 45.

Further it should be noted that due to the fact that in the present embodiment the roller 49 is rotating freely and rolls on the surfaces of the cylindrical elements 43, 45 and the surfaces of the flat spacer 33 and the fish plate 47, the roller 49 keeps friction between the first and the second element 23, 27 at a minimum during release and resetting of the safety release device thereby keeping wear at a minimum.

## Claims

1. A safety release device for allowing by release mutual displacement of two interconnected and force transmitting elements (23, 27) when subjected to an excessive force, comprising a first portion (43) of one of said two interconnected and force transmitting elements and a second portion (45) of the other of said two interconnected and force transmitting elements, the first portion (43) and the second portion (45) transmitting force in a first direction (F_{c}) and one (45) of said first and second portions being able to move laterally, possibly by rotation, relative to said first direction against a retaining force (37), when the force transmitted becomes excessive, to release the safety release device, **characterized in that** a rotating element (49) is inserted between the first portion (43) and the second portion (45), said rotating element (49) transmitting force between the first portion (43) and the second portion (45) prior to release of the safety release device.

2. A safety release device according to claim 1, **characterized in that** the rotating element comprises a rolling member (49) rolling by release of the safety release device on a surface of at least one of the first and the second portion (43, 45).

3. A safety release device according to claim 2, **characterized in that** said surface is a convex curved surface.

4. A safety release device according to any of the claims 1 to 3, **characterized in that** the rotating element comprises a link member(51) journalled to at least one of the first portion and the second portion (43, ,45).

5. A safety and release device according to claim 2 and claim 4, **characterized in that** the link member (51) engages with the rolling member (49).

6. A safety release device according to claim 4 or 5, **characterized in that** the link member (51) is journalled to both of the first and the second portion (43, 45).

7. A safety release device according to claim 6 **characterized in that** the link member (51) is journalled to at least one of the first and the second portion (43, 45) through an elongated hole (55).

8. A safety release device according to claim 6 or 7, **characterized in that** the first and the second portion (43, 45) comprise partial circular cylindrical surfaces on which the rolling member (49) rolls by release of the safety release device, said partial circular cylindrical surfaces having mutually parallel axes, that the link member (51) is journalled to either of the first and the second portion (43, 45) to rotate around the axes of the partial circular cylindrical surfaces, and that the link member (51) engages with the roller member (49) to allow the roller member to rotate around an axis parallel to and aligned (61) with the axes of the partial circular cylindrical surfaces.

9. A mower comprising connecting elements one of which comprises two interconnected and force transmitting elements, **characterized in** comprising a safety release device according to any of the claims 1 to 8.
